# EUROPEAN PATENT APPLICATION

(11) **EP 2 669 857 A1**
(43) Date of publication of application: **04.12.2013**
(21) Application number: 13168562.0
(22) Date of filing: 21.05.2013
(51) Int. Cl.: G06Q 10/10, H04L 29/12

(54) **Destination input device, destination input program, data transmission device and data transmission program**

(30) Priority: 29.05.2012 JP 2012122393
(71) Applicant: Oki Data Corporation, Tokyo 108-8551 (JP)
(72) Inventor: Namioka, Jun, Tokyo, 108-8551 (JP)
(74) Representative: Piotrowicz, Pawel Jan Andrzej

(57) **Abstract**

A destination input device includes a destination group storage unit that stores at least one destination group each of which includes at least one destination identifier, a destination input unit that receives a user's input of a destination identifier of transmit data, a destination group searching unit that searches the at least one destination group stored in the destination group storage unit to find the destination group corresponding to the destination identifier received by the destination input unit, and a destination input assisting unit that presents information regarding the destination group found by the destination group searching unit to the user so as to assist the user in inputting another destination identifier.

## Description

### BACKGROUND OF THE INVENTION

The present invention relates to a destination input device, a destination input program, a data transmission device and a data transmission program.

There is known a system that assists a user when inputting a destination address of an email.

For example, Japanese Laid-open Patent Publication No. 2008-71310 discloses a system configured to present destination addresses included in a destination group, and also present check boxes with which the user can designate destination addresses to which the email is to be transmitted (or not to be transmitted).

However, if a large number of the destination addresses are included in the destination group, the user is required to selectively click a large number of the check boxes, and therefore incorrect operation may occur. Further, it is troublesome for the user to repeat the same operation for designating the destination addresses.

Therefore, it is demanded to enhance convenience in inputting a plurality of destination identifiers (for example, destination addresses) of transmit data (for example, emails).

### SUMMARY OF THE INVENTION

An aspect of the present invention is intended to provide a destination input device, a destination input program, a data transmission device and a data transmission program capable of enhancing convenience in inputting a plurality of destination identifiers of transmit data.

According to an aspect of the present invention, there is provided a destination input device including a destination group storage unit that stores at least one destination group each of which includes at least one destination identifier, a destination input unit that receives a user's input of a destination identifier of transmit data, a destination group searching unit that searches the at least one destination group stored in the destination group storage unit to find the destination group corresponding to the destination identifier received by the destination input unit, and a destination input assisting unit that presents information regarding the destination group found by the destination group searching unit to the user so as to assist the user in inputting another destination identifier.

With such a configuration, it becomes possible to enhance convenience in inputting a plurality of destination identifiers (for example, destination addresses) of transmit data (for example, emails).

Further scope of applicability of the present invention will become apparent from the detailed description given hereinafter. However, it should be understood that the detailed description and specific embodiments, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

In the attached drawings:
FIG. 1 is a block diagram showing a functional configuration of a data transmission device as well as connections between devices according to the first embodiment of the present;
FIG. 2 is a schematic view showing an example of a destination group list stored in the data transmission device according to the first embodiment;
FIG. 3 is a schematic view showing an example of a transmission history list stored in the data transmission device according to the first embodiment;
FIG. 4 is a flowchart showing an operation of the data transmission device according to the first embodiment;
FIG. 5 is a schematic view showing an example of an operation screen displayed by the data transmission device according to the first embodiment;
FIGS. 6A, 6B, 6C and 6D are schematic views for illustrating an example of transition of the operation screen displayed by the data transmission device according to the first embodiment;
FIG. 7 is a block diagram showing a functional configuration of a data transmission device according to the second embodiment of the present invention;
FIG. 8 is a flowchart showing an operation of the data transmission device according to the second embodiment, and
FIGS. 9A, 9B, 9C, 9D, 9E and 9F are schematic views for illustrating an example of transition of the operation screen displayed by the data transmission device according to the second embodiment.

### DETAILED DESCRIPTION OF THE PREFERRED EMBODIMENT

Hereinafter, embodiments of the present invention will be described with reference to drawings. The drawings are provided for illustrative purpose and are not intended to limit the scope of the present invention.

### FIRST EMBODIMENT.

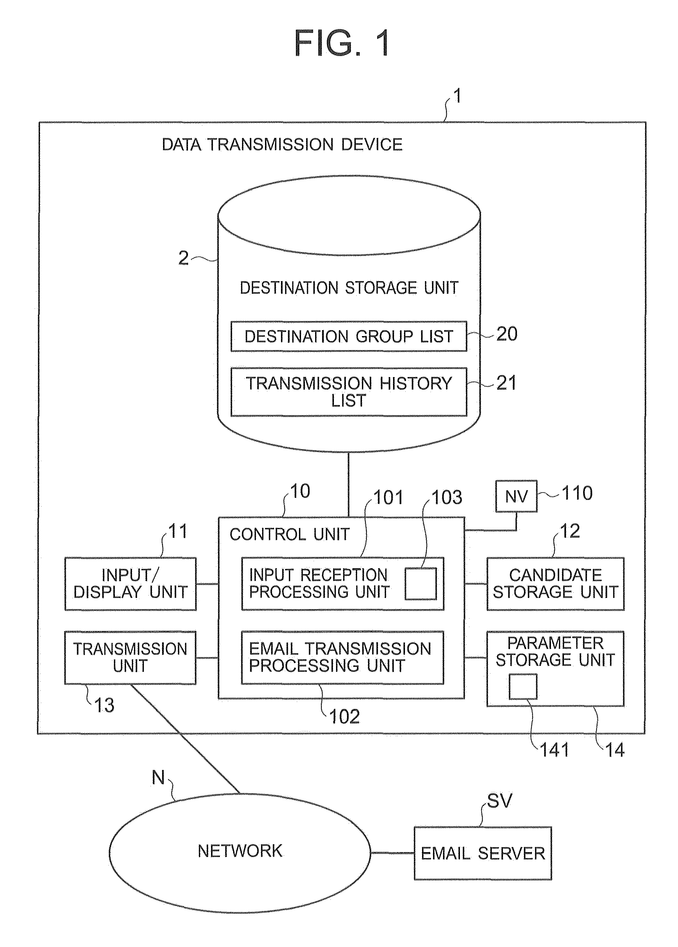

A destination input device, a destination input program, a data transmission device and a data transmission program according to the first embodiment of the present invention will be described with reference to FIGS. 1 through 6D. Hereinafter, an email (i.e., an electronic mail) will be described as an example of transmit data (i.e., data to be transmitted).

### <CONFIGURATION OF FIRST EMBODIMENT>

FIG. 1 is a block diagram showing a functional configuration of a data transmission device 1 as well as connections between devices of the first embodiment.

The data transmission device 1 has a function of an electronic mail client that transmits an email to an email server SV using an email transfer protocol such as SMTP (Simple Mail Transfer Protocol). The email server SV extracts a header (i.e., a destination address) of the received email, and performs processing such as forwarding the email to another email server, or storing the email into a mail box corresponding to the email address.

An internal configuration of the data transmission device 1 will be described.

The data transmission device 1 includes a destination storage unit 2, a control unit 10, an input/display unit 11, a candidate storage unit 12, a communication unit 13 and a parameter storage unit 14.

Components (i.e., the control unit 10, the destination storage unit 2, the candidate storage unit 12 and the parameter storage unit 14) of the data transmission device 1 other than hardware components can be configured by installing a data transmission program (including a destination input program) of the first embodiment into an information processing device (for example, a computer) having a processor, a memory and the like. The data transmission program (including the destination input program) of the first embodiment can be installed from a nonvolatile memory 110 (for example, an USB memory or a CD-ROM, or a server connected via network) into the information processing device. The components of the data transmission device 1 of functionally illustrated as shown in FIG. 1.

The data transmission program corresponds to, for example, software of an email client that receives a user's input of content of an email, and transmits the email to the email server. The destination input program corresponds to, for example, processing performed by the email client to receive a user's input of a destination address of the email.

In the first embodiment, the destination input program is implemented by a destination input processing unit 103 of an input reception unit 101, the destination storage unit 2, the candidate storage unit 12 and the parameter storage unit 14. The data transmission program including the destination input program is installed in the data transmission device 1, and therefore the data transmission device 1 functions as a destination input device according to the first embodiment. In other words, the data transmission device 1 has the destination input device according to the first embodiment.

The input/display unit 11 (i.e., an interface unit) is configured to receive a user's input of operations and to present (for example, display) information to the user. To be more specific, the input/ display unit 11 presents (i.e., displays) information to the user according to an instruction of the control unit 10, and supplies the user's input content (command) to the control unit 10. A device that constitutes the input/display unit 11 is not limited. In a particular example, the input/display unit 11 of this embodiment is configured to present information to the user via a display, and to receive a user's input via an input tool such as a mouse or keyboard. It is also possible that the input/display unit 11 has a touch panel for presenting (displaying) information to the user and receiving the user's input.

The control unit 10 is configured to control respective components of the data transmission device 1, and to perform image processing. The control unit 10 includes an input reception processing unit 101 and an email transmission processing unit 102. Detailed descriptions of the input reception processing unit 101 and the email transmission processing unit 102 will be made later.

The input reception processing unit 101 performs processing to receive the content of the email from the user. The input reception processing unit 101 includes the destination input processing unit 103. To be more specific, the input reception processing unit 101 causes the input/display unit 11 to display an operation screen allowing the user to input content of an email, and obtains data input by the user via the operation screen. In this regard, the input/display unit 11 and the input reception processing unit 101 (more specifically, the destination input processing unit 103) constitute a destination input unit that receives from a user's input of a destination address (i.e., a destination identifier).

The destination input processing unit 103 of the input reception processing unit 101 performs processing to assist the user in inputting a destination address of the email (i.e., destination address input assisting processing). The destination address input assisting processing will be described later.

The email transmission processing unit 102 performs processing to create data of an email having a predetermined format based on data (constituting the email) received at the input reception processing unit 101. The email transmission processing unit 102 performs processing to transmit the created data of the email to the email server SV using the predetermined protocol.

The destination storage unit 2, the candidate storage unit 12 and the parameter storage unit 14 are configured to manage information used in the destination address input assisting processing performed by the input reception processing unit 101.

The destination storage unit 2 includes a destination group list 20 and a transmission history list 21. In this regard, the destination storage unit 2 constitutes a destination group storage unit.

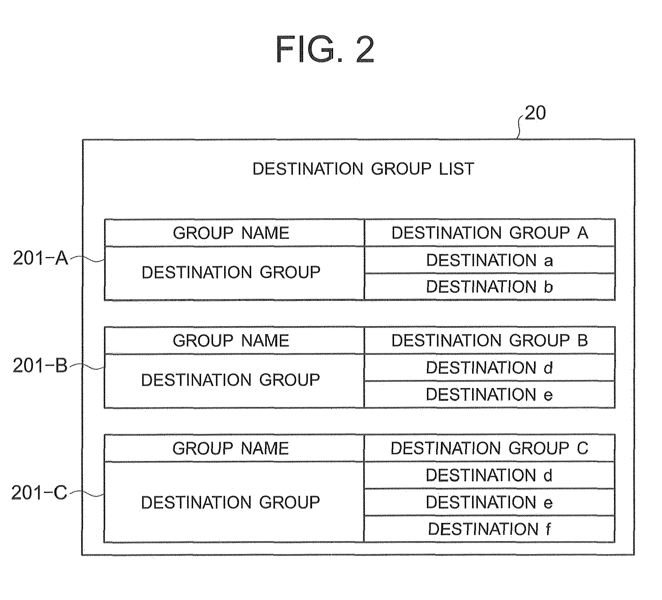

FIG. 2 is a schematic view showing an example of a destination group list 20 stored in the destination storage unit 2.

As shown in FIG. 2, the destination group list 20 includes at least one destination group information 201 each of which includes at least one destination address registered by the user. The destination group list 20 shown in FIG. 2 includes three destination group information 201-A, 201-B and 201-C. In this regard, the number of destination group information 201 included in the destination group list 20 is not limited.

As shown in FIG. 2, each destination group information 201 includes a "group name", and a "destination group" including at least one destination address.

The group name of the destination group information 201 is set by the user. In this embodiment, for convenience of explanation, the group names of the destination group information 201-A, 201-B and 201-C are respectively set to "destination group A", "destination group B" and "destination group C".

The destination group of the destination group information 201 includes a list of at least one destination address registered by the user.

In this specification, the destination addresses are referred to as "destination a", "destination b" and the like for convenience of explanation. However, the destination address is actually in the form of an address (for example, "xxx@xxx.com") generally set in a header of the email transmitted by the data transmission device 1.

As shown in FIG. 2, the destination group information 201-A includes "destination a" and "destination b" as the destination groups. The destination group information 201-B includes "destination d" and "destination e" as the destination groups. The destination group information 201-C includes "destination d", "destination e" and "destination f" as the destination groups.

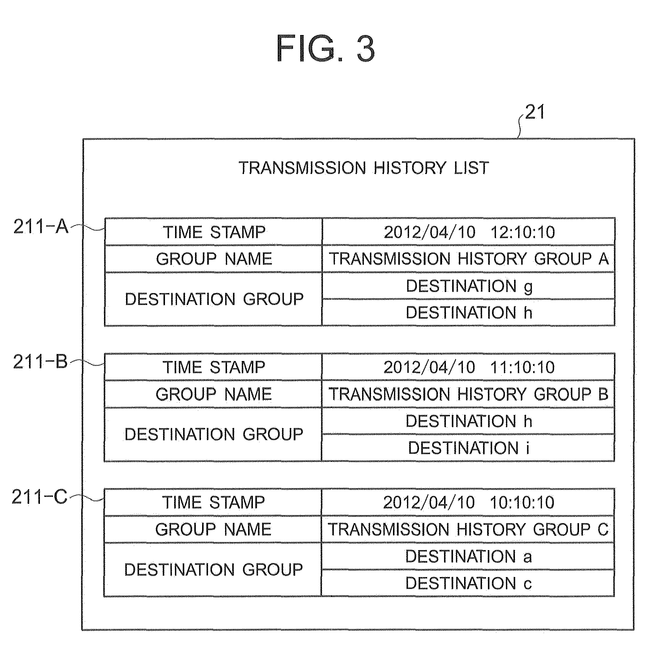

FIG. 3 is a schematic view showing an example of a transmission history list 21 stored in the destination storage unit 2.

As shown in FIG. 3, the transmission history list 21 includes at least one transmission history information 211 each of which includes at least one destination address of the email that was previously transmitted by the data transmission device 1. The transmission history list 21 shown in FIG. 3 includes three transmission history information 211-A, 211-B and 211-C. In this regard, the number of transmission history information 211 included in the transmission history list 21 is not limited.

As shown in FIG. 3, the transmission history information 211 includes a "group name", a "time stamp" and a "destination group" including at least one destination address.

Date and time when the email corresponding to the transmission history information 211 was transmitted are registered in a section of "time stamp" of the transmission history information 211. The registration of the data and time is performed by the control unit 10 (more specifically, the email transmission processing unit 102).

For example, the email corresponding to the transmission history information 211-A was sent by the data transmission device 1 to "destination a" and "destination b" at April 10, 2012. Therefore, "2012/04/10" is registered in the section of the "time stamp" of the transmission history information 211-A.

The control unit 10 (more specifically, the input reception processing unit 101) performs setting of the group name of each transmission history information 211 using a predetermined method. In this regard, the input reception processing unit 101 and the email transmission processing unit 102 constitutes a destination history group creating unit. Further, the input reception processing unit 101 (more specifically, the destination input processing unit 103) constitutes a history managing unit.

In this embodiment, the group names of the transmission history information 211-A, 211-B and 211-C are respectively set to "transmission history group A", "transmission history group B" and "transmission history group C" for convenience of explanation. It is also possible that the group names of the transmission history information 211 are set to sequential numbers (for example, 1, 2, 3, 4 ...), or set so as to include time stamps.

As shown in FIG. 3, the transmission history information 211-A includes "destination g" and "destination h" as the destination groups. The transmission history information 211-B includes "destination h" and "destination i" as the destination groups. The transmission history information 211-C includes "destination a" and "destination c" as the destination groups.

The input reception processing unit 101 (more specifically, the destination input processing unit 103) searches the destination storage unit 2 (i.e., the destination group list 20 and the transmission history list 21) based on the destination address input by the user as a search key, and finds information (i.e., the destination group information 201 and/or the transmission history information 211) that includes the destination group including the destination address matching the destination address input by the user. Further, the input reception processing unit 101 (more specifically, the destination input processing unit 103) stores the found information in the candidate storage unit 12. As a result, the candidate storage unit 12 stores information (i.e., the destination group information 201 and the transmission history information 211) supplied by the input reception processing unit 101.

In this regard, the input reception processing unit 101 (more specifically, the destination input processing unit 103) constitutes a destination group searching unit.

If the number of the transmission history information 211 included in the transmission history list 21 exceeds a set value of a searching period value 141, the input reception processing unit 101 (more specifically, the destination input processing unit 103) searches only the same number of transmission history information 211 as the set value of the searching period value 141 in order of newness, and does not search older transmission history information 211. The setting value of the searching period value 141 is stored in the parameter storage unit 14.

In the transmission history list 21, the transmission history information 211 to be searched by the input reception processing unit 101 (more specifically, the destination input processing unit 103) can be determined in other ways. For example, the input reception processing unit 101 (more specifically, the destination input processing unit 103) can search the transmission history information 211 having the time stamp within a predetermined period (for example, a week period backward from the present time).

The input reception processing unit 101 (more specifically, the destination input processing unit 103) performs processing to present information regarding the destination groups stored in the candidate storage unit 12, and to receive a user's selection of any destination group(s) among the presented destination groups. Then, the input reception processing unit 101 performs processing to set the destination address (or the destination addresses) included in the selected destination group as a destination address (or destination addresses) of an email which is currently being input.

Further, when the currently input email is transmitted (for example, when the user presses a transmit button), the input reception processing unit 101 registers new transmission history information 211 (having the time stamp of the present time) in the transmission history information list 21. The new transmission history information 211 has the destination group including the destination address set in the email. In this regard, if the number of the transmission history information 211 registered in the transmission history list 21 exceeds the setting value of the searching period value 141, the input reception processing unit 101 (more specifically, the destination input processing unit 103) can delete transmission history information 211 (with older time stamps) as many as the number exceeding the setting value of the searching period value 141 from the transmission history information 211.

In this regard, the input reception processing unit 101 (more specifically, the destination input processing unit 103) constitutes a destination input assisting unit.

### <OPERATION OF FIRST EMBODIMENT>

An operation of the data transmission device 1 according to the first embodiment will be described.

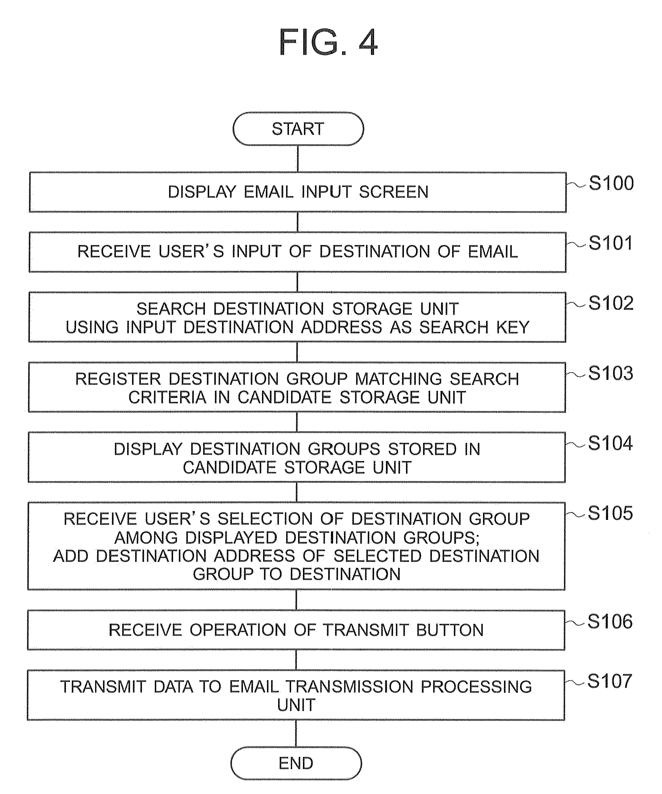

FIG. 4 is a flowchart showing processing of the input reception processing unit 101 (more specifically, the destination input processing unit 103) of the data transmission device 1 to receive a user's input of content of an email.

Here, the user activates the input reception processing unit 101 by operating the input/display unit 11 (for example, by performing an operation on a menu). The input reception processing unit 101 causes the input/display unit 11 to display an operation screen (referred to as an email input screen) for receiving the user's input of the content of the email (S100).

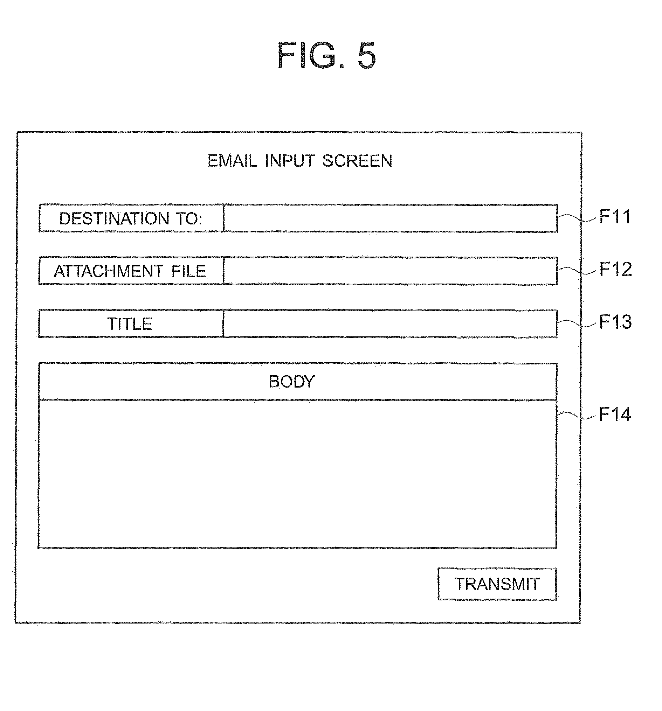

FIG. 5 is a schematic view showing an example of the email input screen displayed on the input/display unit 11 under control of the input reception processing unit 101.

As shown in FIG. 5, the email input screen includes a field F11 for inputting a destination address, a field F12 for designating an attachment file (i.e., for inputting information of a file name or a storage location of the attachment file), a field F13 for inputting a subject of the email, a filed F14 for inputting a body of the email, and a transmit button B11 for transmitting the email having been input.

Manners in which the input reception processing unit 101 receives user's inputs in the fields F12, F13 and F14 and the button B11 are not limited. That is, information input into the fields F12, F13 and F14 and operation of the button B11 can be processed as in a general email client. Therefore, a manner in which the input reception processing unit 101 receives information input by the user into the field F11 will be herein described. A combination and arrangement of constituents (i.e., objects such as the fields, the button and the like) of the email input screen are not limited to those shown in FIG. 5, but can be modified in various ways.

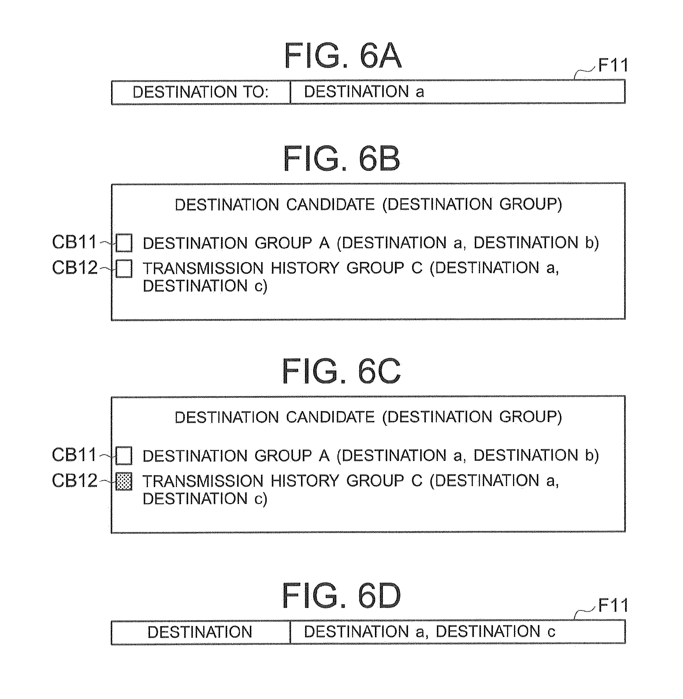

FIGS. 6A, 6B, 6C and 6D are schematic views illustrating an example of transition of the email input screen by processing on and after the step S101 described later. FIGS. 6A through 6D only show objects (i.e., parts) of the email input screen relating to the inputting of the destination address. The destination address input assisting processing performed by the input reception processing unit 101 (more specifically, the destination input processing unit 103) will be described with reference to FIGS. 4 through 6D.

Here, the user inputs a destination address of an email into the field 11 (S101).

For example, the user inputs "destination a" into the field 11 as shown in FIG. 6A using, for example, a keyboard or the like of the input display device 11. A manner in which the destination address is directly input into the field 11 (without assistance of the destination input processing unit 103) is not limited. For example, the user can input the destination address via the keyboard or the user can select the destination address on the menu screen (for example, a list of the destination addresses).

When the destination address is input into the field 11, the destination input processing unit 103 searches the destination group list 20 and the transmission history list 21 of the destination storage unit 2 using the input destination address as a search key to find corresponding information (i.e., the destination group information 201 and/or the transmission history information 211) (S102).

In this example, since the "destination a" is input into the field 11 as the destination address, the address input processing unit 103 searches the lists 20 and 21 to find the information (i.e., the destination group information 201 and/or the transmission history information 211) having the destination group including the "destination a". As a result, the address input processing unit 103 finds the destination group information 201-A and the transmission history information 211-C both including the "destination a".

Here, description has been made to the search when one destination address is input into the field 11. However, if a plurality of destination addresses are input into the field 11, the address input processing unit 103 needs to find the information having the destination address including all of the destination addresses having been input. Therefore, for example, when a plurality of destination addresses are directly input into the field 11, search criteria in the step S102 tend to be narrower. In this regard, in the step S102, it is also possible that the address input processing unit 103 searches only one of the destination group list 20 and the transmission history list 21.

Then, the destination input processing unit 103 extracts the information regarding the group name and the destination group from the information (i.e., the destination group information 201 and/or the transmission history information 211) found in the step S102, and stores the extracted information in the candidate storing unit 12 (S103). In this regard, it is possible that the input reception processing unit 101 omits the steps S103 through S106 if no information is found in the step S102.

For example, the group name and the destination group (i.e., destination addresses) are extracted from the destination group information 201-A and the transmission history information 211-C found in the step S102, and are stored in the candidate storage unit 12.

Next, the destination input processing unit 103 causes the input/display unit 11 to display a screen (referred to as a destination group candidate selection screen) for receiving a user's selection of any destination group(s) among the destination groups stored in the candidate storage unit 12 (S104). The destination group candidate selection screen is displayed in a popup window in the email input screen.

Here, the destination input processing unit 103 causes the input/display unit 11 to display the destination group candidate selection screen for receiving the user's selection of one of the destination group information 201-A and the transmission history information 211-C. FIG. 6B shows an example of the destination group candidate selection screen. The destination group candidate selection screen shown in FIG. 6B includes a check box CB11 for selecting the destination group of the destination group information 201-A, and a check box CB12 for selecting the destination group of the transmission history information 211-C. In a check box CB11 for selecting the destination group of the destination group information 201-A, character strings "Destination Group A (destination a, destination b)" representing the group name and content of the destination group are shown. In a check box CB12 for selecting the destination group of the transmission history information 211-C, character strings "Transmission history Group C (destination a, destination c)" representing the group name and content of the destination group are shown.

In FIGS. 6B and 6C, the check box filled with black color indicates that the check box is selected (i.e., turned "ON"). In contrast, the check box filled with white color indicates that the check box is not selected (i.e., turned or kept "OFF"). In FIG. 6B, the check boxes CB11 and CB12 are not yet selected.

When the user selects either or both of the destination groups in the destination group candidate selection screen (i.e., when either or both of the check boxes CB11 and CB12 are turned ON), the destination input processing unit 103 designates the destination address of the selected destination group as a destination address of the email (S105).

For example, the user selects the check box CB12, i.e., the destination group of the transmission history information 211-C (i.e., turns ON the check box CB12) as shown in FIG. 6C. In this case, as shown in FIG. 6D, the destination input processing unit 103 adds the destination addresses "destination a, destination c" included in the selected transmission history information 211-C to the field F11 of the email input screen. In this regard, the destination input processing unit 103 does not add the same destination address as that already set in the field F11. In this example, since the "destination a" is already set in the field F11, the destination input processing unit 103 adds the "destination c" to the field F11.

Thereafter, when the user completes inputting into other fields of the email input screen and presses the transmit button B11 (S106), the input reception processing unit 101 supplies the input content (i.e., content which is input into the respective fields of the email input screen) to the email transmission processing unit 102 (S107). The email transmission processing unit 102 transmits the supplied content (as the email) to the email server SV.

### <ADVANTAGES OF FIRST EMBODIMENT>

The first embodiment of the present invention provides the following advantages.

According to the first embodiment, the destination address input assisting processing is performed. In the destination address input assisting processing, the search is performed on the destination group list 20 and the transmission history list 21 of the destination storage unit 2 to find the destination group corresponding to the destination address input by the user at the email input screen. The search is performed using the destination address input by the user as the search key. Therefore, the user can input all of the destination addresses of the destination group only by selecting among the destination groups displayed by the destination input processing unit 103. When the user is going to transmit the email to the same destination address as that of an previously transmitted email, the user does not need to input or add the destination address using the same procedure, since the destination address of the previously transmitted email is already registered in the destination storage unit 2 (i.e., the transmission history list 21). Further, even when the user does not know the content (i.e., destination addresses) of the destination groups stored in the destination group list 20 and the transmission history list 21, the user can easily use the destination groups in the lists 20 and 21 without confirming the destination addresses of the destination groups already registered in the destination storage unit 2.

### SECOND EMBODIMENT.

A destination input device, a destination program, a data transmission device, and a data transmission program according to the second embodiment will be described.

### <CONFIGURATION OF SECOND EMBODIMENT>

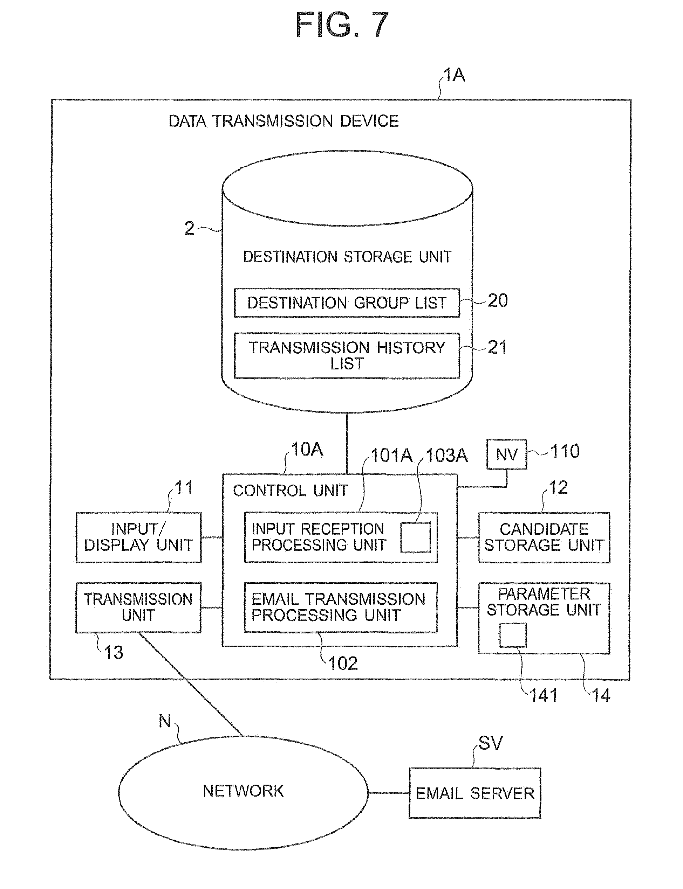

FIG. 7 is a block diagram showing a functional configuration of a data transmission device 1A according to the second embodiment.

In the data transmission device 1A of the second embodiment, an input reception processing unit 101A (more specifically, a destination input processing unit 103A) of a control unit 10A performs destination address input assisting processing which is different from that of the first embodiment. Other components of the data transmission device 1A of the second embodiment are the same as those of the data transmission device 1 of the first embodiment, and assigned the same reference numerals.

In the above described first embodiment, the input reception processing unit 101 (more specifically, the destination input processing unit 103) presents the destination groups to the user and receives the user's selection of the destination group by means of the destination group candidate selection screen. In contrast, according to the second embodiment, the input reception processing unit 101A (more specifically, the destination input processing unit 103A) further performs processing to receive a user's selection of whether or not to add the destination address (belonging to the selected destination group) to the destination address of the email which is being input. The destination address input assisting processing performed by the input reception processing unit 101A (more specifically, the destination input processing unit 103A) will be described below.

### <OPERATION OF SECOND EMBODIMENT>

An operation of the data transmission device 1A of the second embodiment will be described focusing on a difference from the operation of the data transmission device 1 of the first embodiment.

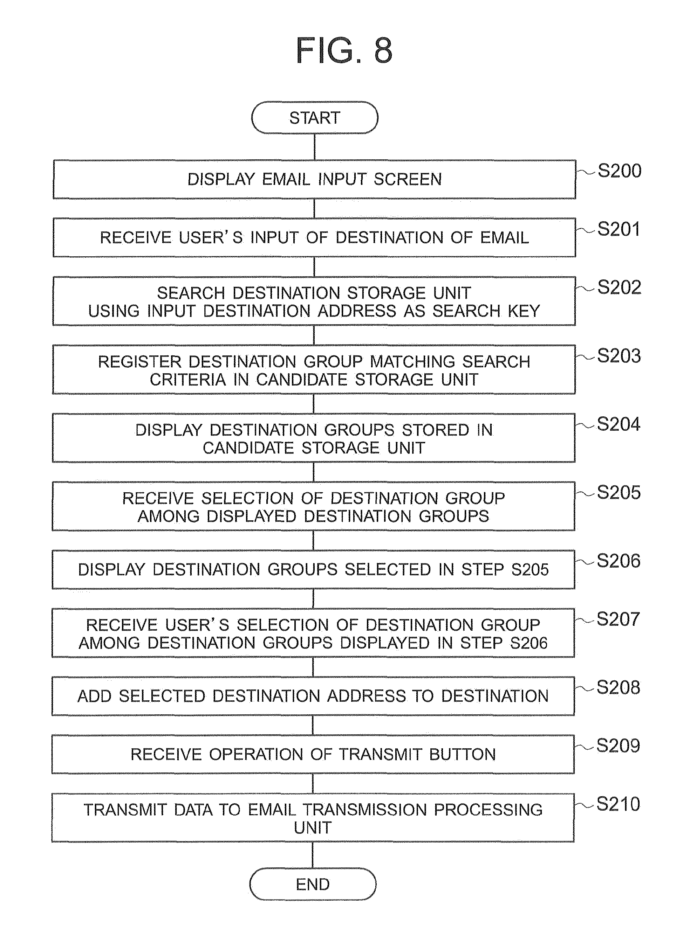

FIG. 8 is a flowchart showing a processing of the input reception processing unit 101A (more specifically, the destination input processing unit 103A) of the data transmission device 1A to receive a user's input of content of an email.

First, as was described in the first embodiment, the input reception processing unit 101A causes the input/display unit 11 to display the email input screen (see FIG. 5) according to a user's operation (S200).

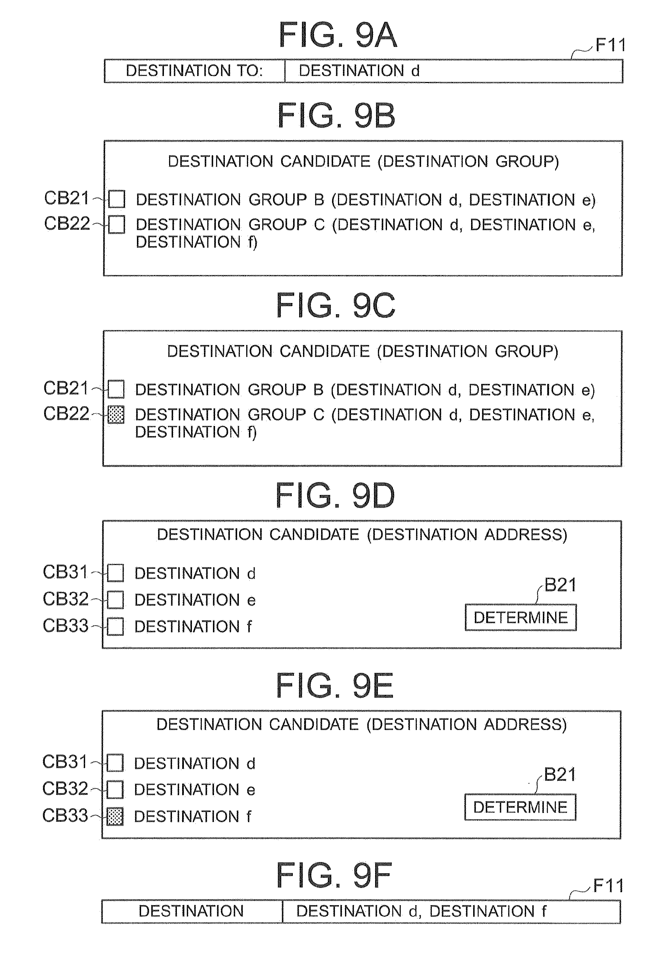

FIGS. 9A, 9B, 9C, 9D, 9E and 9F are schematic views showing an example of transition of the email input screen by processing on and after the step S202 described later. FIGS. 9A through 9F only show objects (i.e., parts) of the email input screen relating to the inputting of the destination address. The destination address input assisting processing performed by the input reception processing unit 101A (more specifically, the destination input processing unit 103A) will be described with reference to FIGS. 5, 8, and 9A through 9F.

Here, the user inputs a destination address of an email into the field 11 (S201). For example, the destination address "destination d" is inputted into the field 11 as shown in FIG. 9A.

When the destination address is input into the field 11, the input reception processing unit 101A searches the destination group list 20 and the transmission history list 21 of the destination storage unit 2 using the input destination address as the search key to find corresponding information (i.e., the destination group information 201 and/or the transmission history information 211) as in the first embodiment (S202).

In this example, the destination address "destination d" is input into the field 11. Therefore, the input reception processing unit 101A (more specifically, the destination input processing unit 103A) searches the lists 20 and 21 to find the information (i.e., the destination group information 201 and/or the transmission history information 211) having the destination group including the "destination d". As a result, the input reception processing unit 101A (i.e., the destination input processing unit 103A) finds the destination group information 201-B and the destination group information 201-C both including the "destination d".

Then, the input reception processing unit 101A (more specifically, the destination input processing unit 103A) extracts the information of the group name and the destination group from the information (i.e., the destination group information 201 and/or the transmission history information 211) found in the step S202, and stores the extracted information in the candidate storage unit 12 (S203). For example, the group name and the destination group (destination addresses) are extracted from the destination group information 201-B and the destination group information 201-C, and are stored in the candidate storage unit 12.

Next, the destination input processing unit 103A causes the input/display unit 11A to display a screen (referred to as a destination group candidate selection screen) for receiving a user's selection of any destination group (s) among the destination groups stored in the candidate storage unit 12 (S204). The destination group candidate selection screen is displayed in a popup window in the email input screen.

Here, the destination input processing unit 103A causes the input/display unit 11 to display the destination group candidate selection screen for receiving the user's selection of either or both of the destination group information 201-B and the destination group information 201-C. FIG. 9B shows an example of the destination group candidate selection screen. The destination group candidate selection screen shown in FIG. 9B includes a check box CB21 for selecting the destination group of the destination group information 201-B, and a check box CB22 for selecting the destination group of the destination group information 201-C. As shown in FIG. 9B, the check boxes CB21 and CB22 of the destination group candidate selection screen are respectively shown with addition of information regarding the corresponding destination groups (i.e., the group names and the destination addresses).

When the user selects either or both of the destination groups in the destination group candidate selection screen (i.e., when either or both of the check boxes CB21 and CB22 are turned ON), the destination input processing unit 103A causes the input/display unit 11A to display a screen (referred to as a destination address candidate selection screen) in a popup window in the email input screen for receiving a user's selection of any destination address(es) among the destination addresses belonging to the selected designation group (S205).

For example, the user selects (i.e., turns ON) the check box CB22 corresponding to the destination group of the destination group information 201-C. In this case, the input reception processing unit 101A displays the destination address candidate selection screen in the popup window in the email input screen so as to allow the user to select any of the "destination d", "destination e" and "destination f" belonging to the selected destination group information 201-C as shown in FIG. 9D.

The destination address candidate selection screen shown in FIG. 9D includes a check box CB31 for selecting the "destination d", a check box CB32 for selecting the "destination e", a check box CB33 for selecting the "destination f", and a determine button (i.e., an enter button) for confirming the destination address to be added. With the destination address candidate selection screen, the user's selection of at least one destination address can be received.

Then, when the user selects at least one destination address and presses (clicks) the determine button B21 in the destination address candidate selection screen (S207), the destination input processing unit 103A adds the selected destination address to the field F11 of the email input screen as shown in FIG. 9F (S208).

For example, the user selects (i.e., turns ON) the check box CB33 corresponding to "destination f" as shown in FIG. 9E. In this case, the destination input processing unit 103A adds the selected destination address ("destination f") to the field F11 of the email input screen.

Thereafter, when the user completes inputting into other fields of the email input screen (see FIG. 5) and presses the transmit button B21 (S209), the input reception processing unit 101A supplies the input content to the email transmission processing unit 102 (S210). The email transmission processing unit 102 transmits the supplied content (as the email) to the email server SV.

### <ADVANTAGES OF SECOND EMBODIMENT>

The second embodiment of the present invention provides the following advantages in addition to the advantages of the first embodiment.

The input reception processing unit 101A (i.e., the destination input processing unit 103A) performs a processing to receive the user's selection of whether or not to add the destination address (belonging to the selected destination group) to the destination of the email which is being input. This is advantageous when the destination group list 20 does not store a destination group including user's desired destination addresses only. In such a case, by presenting (displaying) the destination group including those close to the user's desired destination addresses, the user can select the user's desired destination addresses from the presented destination group. In other words, the user can easily input the destination addresses by editing the presented destination group.

### MODIFICATIONS.

The present invention is not limited to the above described embodiments, and the above described embodiments can be modified as follows.

In the above described embodiments, the destination storage unit (i.e., the destination group list and the transmission history list) is provided in the data transmission device. However, it is also possible to provide the destination storage unit in an external unit such as a data base server. The data transmission device can be configured to read information from the external unit. In such a case, it is possible that the destination storage unit is commonly used by a plurality of data transmission devices. In such a case, a plurality of data transmission devices can search the common destination storage unit. In contrast, when the destination storage unit (i.e., the destination group list and the transmission history list) is provided in the data transmission device, search can be performed without using data communication via a network, and therefore processing time can be shortened,

In the above described embodiments, the data transmission device has a user interface (i.e., the input/display device) directly operated by the user. The user interface of the data transmission device is not limited. For example, it is possible to employ an ASP (Application Service Provider) configuration. To be more specific, the data transmission device can provide the operation screen (for example, the email input screen shown in FIG. 6A through 6D or the like) having function of the input reception processing unit to another terminal having a user interface (for example, a terminal having a WEB browser).

Further, a creating method of transmit data (for example, an email) is not limited to those described in the embodiments. For example, the input device of the input/display device can include a scanner that scans a manuscript and creates data (i.e., document data and image data). The data created by the scanner (for example, an attachment file attached to the email or the like) can be used as transmit data. For example, the data transmission program of the present invention (including the destination input program) can be installed in a multifunction peripheral (having a plurality of functions such as copying, facsimile, printing or the like). In such a case, the multifunction peripheral can be configured to function as the data transmission device according to the present invention.

In the above described embodiments, the destination identifier (i.e., the destination address) used in the data transmission device has the form of an email address such as "xxx@xxx.com". However, the destination identifier is not limited to the form of the email address, but can have any form indicating the destination of transmit data (i.e., an email). For example, the data transmission device of the present invention can be used as a terminal (for example, an email server) in an email system in which a name (for example, Chinese characters, Japanese syllabary characters, and alphabetical characters) is used as the destination identifier. In such a case, the name of a user of the destination is used as the destination identifier.

While the preferred embodiments of the present invention have been illustrated in detail, it should be apparent that modifications and improvements may be made to the invention without departing from the spirit and scope of the invention as described in the following claims.

## Claims

1. A destination input device (1, 1A) comprising:
a destination group storage unit (2) that stores at least one destination group each of which includes at least one destination identifier;
a destination input unit (11, 101, 103) that receives a user's input of a destination identifier of transmit data;
a destination group searching unit (101, 103) that searches the at least one destination group (201, 211) stored in the destination group storage unit (2) to find the destination group (201, 211) corresponding to the destination identifier received by the destination input unit (11, 101, 103), and
a destination input assisting unit (101, 103) that presents information regarding the destination group (201, 211) found by the destination group searching unit (101, 103) to the user so as to assist the user in inputting another destination identifier.

2. The destination input device (1, 1A) according to claim 1, wherein the destination input assisting unit (101, 103) presents information regarding the destination group (201, 211) found by the destination group searching unit (101, 103) to the user, allows the user to select at least one destination group (201, 211), and adds a destination identifier belonging to the selected destination group (201, 211) to a destination of the transmit data.

3. The destination input device (1, 1A) according to claim 1 or 2, wherein the at least one destination group (201, 211) stored in the destination group storage unit (2) includes a destination group (201, 211) registered by the user.

4. The destination input device (1, 1A) according to any one of claims 1 to 3, further comprising a destination history group creating unit (101, 102) that creates a destination group (211) including the destination identifier of the transmit data received by the destination input unit (11, 101, 103), and stores the created destination group (211) in the destination group storage unit (2).

5. The destination input device (1, 1A) according to claim 4, wherein the destination history group creating unit (101, 102) creates a plurality of the destination groups (211),
wherein the destination input device (1, 1A) further comprises a history managing unit (101, 103) that manages time stamps assigned to the destination groups (211) created by the destination history group creating unit (101, 102), and
wherein, among the destination groups (211) created by the destination history group creating unit (101, 102), the destination group searching unit (101, 103) searches the destination groups (211) whose time stamps meet a predetermined condition.

6. The destination input device (1, 1A) according to claim 5, wherein, among the destination groups (211) created by the destination history group creating unit (101, 102), the destination group searching unit (101, 103) searches the destination groups (211) as many as a predetermined number based on newness of the time stamps.

7. The destination input device (1, 1A) according to claim 2, wherein the destination input assisting unit (101, 103) presents a destination identifier included in the selected destination group (201, 211) to the user.

8. The destination input device (1, 1A) according to claim 7, wherein the destination input assisting unit (101, 103) presents a plurality of destination identifiers included in the selected destination group (201, 211) to the user, allows the user to select a destination identifier among the presented destination identifiers, and adds the selected destination identifier to a destination of the transmit data.

9. A destination input program that causes a computer to execute functions as:
a destination group storage unit (2) that stores at least one destination group (201, 211) each of which includes at least one destination identifier;
a destination input unit (11, 101, 103) that receives a user's input of a destination identifier of transmit data;
a destination group searching unit (101, 103) that searches the at least one destination group (201, 211) stored in the destination group storage unit (2) to find the destination group (201, 211) corresponding to the destination identifier received by the destination input unit (11, 101, 103), and
a destination input assisting unit (101, 103) that presents information regarding the destination group (201, 211) found by the destination group searching unit (101, 103) to the user so as to assist the user in inputting another destination identifier.

10. A data transmission device (1, 1A) for transmitting data, the data transmission device (1, 1A) comprising:
the destination input device (1, 1A) according to any one of claims 1 to 8.

11. A data transmission program for transmitting data, data transmission program causing the computer to execute the functions according to claim 9.
